# EUROPEAN PATENT SPECIFICATION

(11) **EP 0 398 148 B1**
(45) Date of publication and mention of the grant of the patent: **01.04.1998**
(21) Application number: 90108749.4
(22) Date of filing: 09.05.1990
(51) Int. Cl.: C08J 9/14

(54) **Preparation of urethane and isocyanurate foams in the presence of a low boiling point blowing agents**
Herstellung von Urethan und Isocyanurat-Schäumen in Anwesenheit von niedrig siedenden Treibmitteln
Préparation de mousses d'uréthane et isocyanurate en présence d'agents gonflants à bas point d'ébullition

(30) Priority: 10.05.1989 US 350174
(43) Date of publication of application: 22.11.1990
(73) Proprietor: THE DOW CHEMICAL COMPANY, Midland, Michigan 48674 (US)
(72) Inventor: Grünbauer, Henri Jacobus Marie, NL-4501 HC Oostburg (NL); Smits, Guido Freddy, B-2110 Wijnegem (BE)
(74) Representative: Huber, Bernhard, Dipl.-Chem.

(56) References cited:
- EP-A- 351 614
- EP-A- 394 839
- JP-A- 1 079 287
- JP-A- 1 103 689
- JP-A-57 040 533
- US-A- 3 391 093
- US-A- 4 636 529
- Beilsteins Handbuch der organischen Chemie, 4th Ed., 1st Vol., Springer Verlag, 1958,pp 218,219.

## Description

### Description for the following Contracting States : AT, BE, CH, DE, ES, FR, GB, IT, LI, NL, SE

This invention relates to rigid, closed-celled polyisocyanate-based foam, particularly polyurethane, polyurethane-isocyanurate and polyurethane-urea foams prepared using blowing agents having boiling points of 266K or less, which are organic compounds, particularly halocarbons.

It is well-known to prepare such polyurethane foams by reacting an organic polyisocyanate with an active hydrogen-containing compound in the presence of a blowing agent or agents. Generally speaking, such blowing agents are inert compounds that do not decompose or react during the polymerization reaction which are liquid at room temperature. The polymerization reaction is exothermic with the reaction exotherm being sufficient to vaporize the blowing agent, which then becomes encapsulated in the liquid phase of the polymerizing reaction mixture resulting in the formation of cells. The formation of cells causes the reaction mixture to expand and form a foam which subsequently cures to become a rigid closed-celled polyurethane foam.

It is also well-known to prepare foams with a combination of such liquid blowing agent(s) and small amounts of a blowing agent precursor. A blowing agent precursor is a substance which reacts chemically with the polymerizing reaction mixture, or decomposes thermally as a result of exposure to, for example the reaction exotherm, generating *"in situ"* a gas. The generated gas functions as additional blowing agent in preparing the foam. A commonly used blowing agent precursor is water, which when reacted with isocyanate provides gaseous carbon dioxide.

Water is frequently used alone in the preparation of open-celled flexible polyurethane foams, but has found little value when used alone or in significant quantities with other blowing agents in the preparation of rigid, closed-celled foams. Frequently, when water is used in significant quantities to prepare rigid foams the resulting products display a high degree of friability, poor compressive strengths, high open-cell content, commercially unattractive thermal insulation properties and poor dimensional stability. The degree of friability and open-cell content of a resulting foam can be reduced by careful selection of reactants used in the preparation of the foam. However, the thermal insulation properties and dimensional stability of the foam are not significantly improved in this manner as they are primarily dependent on the gas content within the closed-cells of the foam.

EP-A 0 351 614 published on January 24, 1990 discloses a process for the preparation of cellular foams according to the polyisocyanate polyaddition method in the presence of a blowing agent having low solubility in the reaction components. As suitable blowing agents, octafluoropropane (b.p. 235K), heptafluoropropane (b.p. 256K) and a plurality of other blowing agents having boiling points of greater than 266K are given.

U.S.-Patent 4,636,529 discloses the preparation of polyurethane foams from an organic isocyanate, an organic polyol containing an aromatic polyester polyol and an inert blowing agent containing CHClF₂ (b.p. 232K). The use of CHClF₂ is essential for increasing the amount of the aromatic polyester polyol in the polyol component.

U.S.-Patent 3,391,093 discloses a process for the preparation of a polyurethane foam by reacting an organic polyisocyanate with a polyester polyol in the presence of 2 to 25 wt.-% of a blowing agent having a boiling point above 222K. The use of CO₂ as a blowing agent originating from the reaction of water and isocyanate is considered as being undesired.

Japanese Patent Application JP-A 57-40533 (CA 97(4):24723s) describes the preparation of a polyurethane foam, using 2-chloro-1,1,1,2-tetrafluorethane and, optionally, further aliphatic and/or halogenated aliphatic hydrocarbons having a boiling point of from 10 to 50°C as a blowing agent. The use of water in the reaction mixture is not disclosed.

It is therefore desirable to provide a process for preparing rigid, closed-celled polyisocyanate-based foams in the presence of water and a blowing agent which is able to minimize or overcome the occurrence of deficiencies in dimensional stability in the resulting foam.

In one aspect, this invention is a process for preparing a rigid closed celled polyisocyanate-based foam having an overall density of from 10 to 500 kg/m³ which comprises contacting and reacting an organic polyisocyanate with an isocyanate reactive composition that contains an active hydrogen-containing compound, water and a physical blowing agent characterized in that isocyanate reactive composition comprises:
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and excluding octafluoropropane and heptafluoropropane and contains less than 5 percent by weight of an organic compound having a boiling point of 273K or greater; and
(c) water in from 3.27 to 10 weight percent based on total weight of component (a).

In a second aspect, this invention is an isocyanate reactive composition which comprises
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and excluding octafluoropropane and heptafluoropropane and contains less than 5 percent by weight of an organic compound having a boiling point of 273K or greater; and
(c) water in from 3.27 to 10 weight percent based on total weight of component (a).

Furthermore, this invention concerns a rigid, closed-celled polyisocyanate-based foam obtainable by the process of the invention, wherein the resulting foam contains within its cells a gaseous mixture comprising
(a) from 10 to 75 mole percent based on total moles of (a) and (b) of one or more organic compounds having a boiling point of from 235K to 266K and
(b) from 25 to 90 mole percent based on total moles of (a) and (b) of carbon dioxide,
and which contains less than 5 percent of an organic compound having a boiling point of 273K or greater.

Surprisingly, this invention allows for the preparation of rigid closed-celled polyisocyanate-based foam in the absence of physical blowing agents which are liquid at ambient room temperature. We have discovered that by employing a combination of water and a physical blowing agent having a boiling point of from 235K to 266K closed-celled, rigid polyisocyanate-based foam exhibiting good dimensional stability properties can be prepared. Use of physical blowing agents having higher boiling points in combination with water is not observed to provide the same degree of dimensional stability.

The blowing agent is characterized in that it comprises at least one organic compound having a boiling point at atmospheric pressure of less than or equal to 266K.

Advantageously, for the purpose of handling the organic compound has a boiling point at atmospheric pressure of from 235K and preferably from 252K.

The blowing agent is further characterized in that it is substantially free of organic compounds having boiling points of 273K or greater, and preferably 267K or greater. By "substantially free" it is understood that the boiling agent contains less than 5 percent by weight of its total weight, of such high boiling point organic compounds. Preferably, such high boiling point organic compounds are present in less than 3, more preferably less than 1 percent by weight and most preferably are absent from the blowing agent used in this present invention.

Organic compounds which are suitable for use in this invention are those which are essentially inert, do not react or decompose, under the conditions employed when preparing a polyurethane foam, but have boiling points of such that they are readily volatilized by the reaction exotherm. Typically, such organic compounds are hydrocarbons including alkanes, alkenes, cycloalkanes and cycloalkenes; alkyl alkanoates such as methyl formate; and halocarbons. To provide polyurethane foam with commercially interesting insulation properties, the organic compounds when in a gaseous phase advantageously exhibit gas thermal conductivities of less than 20, preferably less than 15, more preferably less than 13 and most preferably less than 12 mW/M.K at 298K.

The preferred organic compounds are halocarbons or mixtures thereof. The halocarbons can be a halogenated hydrocarbon where the hydrocarbon is methane, ethane, propane, ethylene, propylene or cyclic alkane. Such halogenated hydrocarbons can be a chlorocarbon, a bromocarbon, a fluorocarbon, a chlorofluorocarbon or a bromofluorocarbon. In a more preferred embodiment of this invention, the halocarbon compounds contain at least one hydrogen atom on their carbon backbone. The presence of such a hydrogen atom renders the halocarbon more readily degradable in the environment thus preventing the large accumulation of such compounds. When the halocarbon contains no hydrogen on the carbon backbone, it is termed a "hard" halocarbon. When hydrogen is present, the halocarbon is termed a "soft" halocarbon.

Exemplary of methane halocarbons are the chlorofluoromethanes including dichlorodifluoromethane (R-12; b.p. 243K), difluorochloromethane (R-22; b.p. 232K), chlorofluoromethane (R-31; b.p. 264K); the bromofluoromethanes including bromochlorodifluoromethane (R-12B1; b.p. 269K), and bromodifluoromethane (R-22B1; b.p. 258K).

Exemplary of ethane halocarbons are the chlorofluoroethanes including chloropentafluoroethane (R-115; b.p. 234K), chlorotetrafluoroethane (R-124; b.p. 261K or isomer R-124a; b.p. 263K), and chlorodifluoroethane (R-142b; b.p. 264K); the fluoroethanes including tetrafluoroethane (R-134; b.p. 253K or isomer R-134a; b.p. 246K), trifluoroethane (R-143a; b.p. 235K), difluoroethane (R-152a; b.p. 248K) and fluoroethane (R-161; b.p. 236K).

Exemplary of propane halocarbons are chloroheptafluoropropane (R-217; b.p. 271K),and the fluoropropanes including octafluoropropane (R-218; b.p. 235K), heptafluoropropane (R-227a; b.p. 256K), hexafluoropropane (R-236; b.p. 272K), and pentafluoropropane (R-245d; b.p. 253K).

Exemplary of ethylene and propylene halocarbons are chlorotrifluoroethylene (R-1113; b.p. 245K), chlorodifluoroethylene (R-1122; b.p. 255K), trans-chlorofluoroethylene (R-1131; b.p. 269K), gem-chlorofluoroethylene (R-1131a; b.p. 248K), difluoroethylene (R-1132; b.p. 245K) and chloroethylene (R-1140; b.p. 259K), hexafluoropropylene (R-2116a; b.p. 244K), pentafluoro-propylene (R-2125a; b.p. 252K), tetrafluoropropylene (R-2134a; b.p. 245K), and difluoropropylene (R-2152b; b.p. 244K). Exemplary of cyclic halocarbons are hexafluorocyclopropane (C-216; b.p. 244K) and octafluoro-cyclobutane (C-318 b.p. 268K).

The preferred halocarbons for use in this present invention are the chlorofluorocarbons of methane, ethane and propane; the bromofluorocarbons of methane, ethane and propane; and the fluorocarbons of ethane and propane; or mixtures thereof. Especially preferred are the chlorofluoroethane and fluoroethane halocarbons due to their commercial availability and suitability for preparing polyisocyanate-based foam.

The particularly preferred organic compounds for use in this present invention include chlorofluoromethane (R-31), bromodifluoromethane (R-2281), chlorotetrafluoroethane (R-124 or isomer R-124a), chlorodifluoroethane (R-142b), tetrafluoroethane (R-134 or isomer R-134a), trifluoroethane (R-143), difluoroethane (R-152a) and fluoroethane (R-161), or mixtures thereof.

Especially preferred is chlorodifluoroethane (R-142b) and tetrafluoroethane (R-134 or isomer R-134a).

Polyisocyanate-based foams are prepared by reacting at least one organic polyisocyanate with at least one active hydrogen-containing compound in the presence of water and a blowing agent as described hereinabove.

The quantity of blowing agent employed when preparing a foam is sufficient to give a desired density to the foam and impart the desired dimensional stability. Sufficient blowing agent is employed to provide a polyurethane foam having an overall density of from 10 to 500, preferably from 15 to 200, more preferably from 18 to 100 and most preferably from 18 to 60 kg/m³.

The quantity of water present in the process of this invention is sufficient to provide a noticeable contribution to the blowing and preparation of the foam. Water reacts with isocyanate leading to the generation of gaseous carbon dioxide which can function as a blowing agent. The water is present in from at least 3.27 weight percent based on the total weight of active hydrogen-containing compound present and the quantity of water present does not exceed 10, preferably does not exceed 8, and more preferably does not exceed 7 weight percent.

It is often convenient to preblend the blowing agent with the active hydrogen-containing compound before contacting the resulting blend with the polyisocyanate. It is also possible to simultaneously blend together the polyisocyanate, active hydrogen-containing compound and blowing agent in one operation resulting in the production of polyisocyanate-based foam.

Preferably the blowing agent is blended with the active hydrogen-containing compound before contacting with the polyisocyanate.

An isocyanate reactive composition can be prepared by blending at least one active hydrogen-containing compound with the blowing agent. Advantageously, the blend contains at least one, preferably at least 2 and up to 25, preferably up to 20 and more preferably up to 15 weight percent of the blowing agent by total weight of active hydrogen-containing compound and blowing agent. Isocyanate reactive compositions containing the blowing agent in quantities outside these limits may not provide foam of the desired density. Advantageously, active hydrogen-containing compounds used in preparing the isocyanate reactive composition have an equivalent weight of from 50 to 700, preferably from 70 to 300, more preferably from 90 to 270. For reasons of solubility and retention of blowing agent in the isocyanate-reactive composition, at least one of the active hydrogen-containing compounds has an equivalent weight of at least 140.

Polyisocyanates useful in the process of this invention for making polyisocyanate-based foam inciude aromatic, aliphatic and cycloaliphatic polyisocyanates and combinations thereof. Representative of these types are diisocyanates such as m- or p-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate (and isomers), naphthylene-1,5-diisocyanate, 1-methylphenyl-2,4-phenyldiisocyanate, diphenylmethane-4,4'-diisocyanate, diphenylmethane-2,4'-diisocyanate, 4,4'-biphenylenediisocyanate, 3,3'-dimethoxy-4,4'-biphenylenediisocyanate and 3,3'-dimethyldiphenylpropane-4,4'-diisocyanate; triisocyanates such as toluene-2,4,6-triisocyanate and polyisocyanates such as 4,4'-dimethyldiphenylmethane-2,2',5',5'-tetraisocyanate and the diverse polymethylenepolyphenylpolyisocyanates.

A crude polyisocyanate may also be used in the practice of this invention, such as the crude toluene diisocyanate obtained by the phosgenation of a mixture of toluene diamines or the crude diphenylmethane diisocyanate obtained by the phosgenation of crude diphenylmethanediamine. The preferred undistilled or crude polyisocyanates are disclosed in U.S. Patent 3,215,652.

Especially preferred are methylene-bridged polyphenylpolyisocyanates, due to their ability to cross-link the polyurethane. The isocyanate index, ratio of equivalents of isocyanates to equivalents of active hydrogen-containing groups, is advantageously from 0.9 to 10, preferably from 1.0 to 4.0, and more preferably from 1.0 to 1.5.

Active hydrogen-containing compounds which are useful in this present invention are polyether polyols, i.e., compounds having at least two hydroxyl groups per molecule, which are especially preferred due to their desirable reactivity with polyisocyanates.

Suitable isocyanate-reactive materials also advantageously have a functionality of at least 2, preferably from 3 and up to 16, and preferably up to 8 active hydrogen atoms per molecule. Isocyanate reactive compounds which have functionalities and equivalent weights outside these limits may also be used, but the resulting foam properties may not be desirable for a rigid application.

Most preferred for preparing rigid foams, on the basis of performance, availability and cost, is a polyol prepared by adding an alkylene oxide to an initiator having, from 3 to 8 active hydrogen atoms per molecule. Exemplary of such polyols include those commercially available under the trademark VORANOL and include Voranol 202, Voranol 360, Voranol 370, Voranol 446, Voranol 490, Voranol 575, Voranol 800, all sold by The Dow Chemical Company, and Pluracol 824, sold by BASF Wyandotte.

Other most preferred polyols include alkylene oxide derivatives of Mannich condensates as taught, for example, in U.S. Patents 3,297,597; 4,137,265 and 4,383,102, and aminoalkylpiperazine-initiated polyethers as described in U.S. Patents 4,704,410 and 4,704,411.

In addition to the foregoing critical components, it is often desirable to employ certain other ingredients in preparing polyisocyanate-based foams. Among these additional ingredients are catalysts, surfactants, flame retardants, preservatives, colorants, antioxidants, reinforcing agents, fillers, and antistatic agents.

When preparing a polyisocyanate-based foam by the process of this invention it is generally highly preferred to employ a minor amount of a surfactant to stabilize the cellular structure of the foaming reaction mixture until it cures. Such surfactants advantageously comprise a liquid or solid organosilicone surfactant. Other, less preferred surfactants include polyethylene glycol ethers of long chain alcohols, tertiary amine or alkanolamine salts of long chain alkyl acid sulfate esters, alkyl sulfonic esters and alkyl arylsulfonic acids. Such surfactants are employed in amounts sufficient to stabilize the foaming reaction mixture against cell collapse and the formation of large, uneven cells. Typically, from 0.2 to 5 parts of the surfactant per 100 parts by weight polyol are sufficient for this purpose.

One or more catalysts for the reaction of the polyol and water with the polyisocyanate are advantageously used. Any suitable urethane catalyst may be used, including tertiary amine compounds and organometallic compounds. Exemplary tertiary amine compounds include triethylenediamine, n-methyl morpholine, pentamethyldiethylenetriamine, tetramethylethylenediamine, 1-methyl-4-dimethylaminoethylpiperazine, 3-methoxy-N-dimethylpropylamine, N-ethyl morpholine, diethylethanolamine, N-coco morpholine, N,N-dimethyl-N',N'-dimethyl isopropylpropylenediamine, N,N-diethyl-3-diethylaminopropylamine, dimethylbenzylamine and the like. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-2-ethyl hexanoate, as well as other organometallic compounds such as are disclosed in U.S. Patent 2,846,408. A catalyst for the trimerization of polyisocyanates, such as an alkali metal alkoxide, alkali metal carboxylate, or quaternary amine compound, may also optionally be employed herein. Such catalysts are used in an amount which measurably increases the rate of reaction. Typical amounts are from 0.001 to 1 part of catalyst per 100 parts by weight of polyol.

In the process of making a polyisocyanate-based foam, the polyol(s), polyisocyanate and other components are contacted, thoroughly mixed and permitted to expand and cure into a cellular polymer. The particulate mixing apparatus is not critical, and various types of mixing head and spray apparatus are conveniently used. It is often convenient, but not necessary, to preblend certain of the raw materials prior to reacting the polyisocyanate and active hydrogen-containing components. For example, it is often useful to blend the polyol(s), blowing agent, water, surfactants, catalysts and other components except for polyisocyanates, and then contact this mixture with the polyisocyanate. Alternatively, all components can be introduced individually to the mixing zone where the polyisocyanate and polyol(s) are contacted. It is also possible to pre-react all or a portion of the polyol(s) with the polyisocyanate to form a prepolymer, although such is not preferred.

As already mentioned, in one aspect this invention refers toa polyisocyanate-based foam. The rigid, closed-celled polyisocyanate-based foam is obtainable by the inventive process and the resulting foam contains within its cells a gaseous mixture comprising
(a) from 10 to 75 mole percent based on total moles of (a) and (b) of one or more organic compounds having a boiling point of from 235K to 266K and
(b) from 25 to 90 mole percent based on total moles of (a) and (b) of carbon dioxide,
and which contains less than 5 percent by weight of an organic compound having a boiling point of 273K or greater.

Component (a) of the gaseous mixture within the cells is present in from at least 10, preferably from at least 20, and more preferably from at least 25, and up to 75, preferably up to 65, and more preferably up to 55 mole percent based on total moles of (a) and (b) present.

Component (b), carbon dioxide generated by the reaction of water with organic polyisocyanate is present in from at least 25, preferably from at least 35, and more preferably from at least 45, and up to 90, preferably up to 80, and more preferably up to 75 mole percent based on total moles of (a) and (b) present.

The cell gas mixture is further characterized in that it is substantially free of organic compounds having boiling points of 273K or greater, and preferably 267K or greater. By "substantially free" it is understood that the gas mixture within the cell contains less than 5 mole percent by total moles of (a) and (b) present of such high boiling point organic compounds. Preferably, such high boiling point organic compounds are present in less than 3, more preferably less than 1 mole percent and most preferably are absent from the blowing agent composition.

Cell gas composition is calculated based on quantities of water and blowing agent present in the foam-forming reaction.

The polyisocyanate-based foam obtainable by the process of this invention is useful in a wide range of applications, such as in spray insulation, appliance foam, rigid insulating boardstock, laminates, and many other types of rigid foam.

The following examples are given to illustrate the invention and should not be interpreted as limiting it in any way. Unless stated otherwise, all parts and percentages are given by weight.

### Example 1

Rigid, closed-celled, polyisocyanate-based foams are prepared from the formulation described in Table I. The following abbreviations are used in the table.
- Polyol A-a: propoxylated sorbitol-initiated polyol having an equivalent weight of 146
- Polyol B-a: propoxylated sorbitol-initiated polyol having an equivalent weight of 187
- Polyol C-a: blend of propoxylated sucrose- and glycerine-initiated polyols, an ethylenediamine-initiated polyol and a 500 equivalent weight diol. Total blend has an equivalent weight of 122, average functionality 4.0
- Polyol D-a: 500 equivalent weight propoxylateddiol
- B8427 -: Tegostab® B8427, a silicone surfactant sold by Th. Goldschmidt
- DMCHA -: catalyst, dimethylcyclohexylamine
- PMDETA -: catalyst, pentamethyldiethylenetriamine
- Curithane 206 -: catalyst, sold by The Dow Chemical Company
- R-11;: Refrigerant-11, trichlorofluoromethane
- R-142b;: Refrigerant-142b, chlorodifluoroethane
- 1SO C M220: a crude polymeric methanediphenylisocyanate NCO equivalent weight 137, average functionality sold by The Dow Chemical

Foams are prepared using a high pressure foaming machine. The physical properties of these foams are shown in Table II.

The flowability, density distribution, compressive strength, thermal conductivity (K-factor) and dimensional stability is observed using molded foam prepared in a Brett mold operated at about 45°C. Molded foam dimensions are 200 x 20 x 5 cm. Molded foam having an overall density of about 32 kg/m³ is prepared.

Larger flowability values indicates better flowability of the foaming system. Lower values of density distribution indicate a more uniform density across the foam. K-factor is measured with an Anacon Model 88 Thermal Conductivity Analyzer with cold and hot plate temperatures of 10.2°C and 37.8°C, respectively. Lower values of K-factor indicate better insulative properties.

Post demold expansion is measured in millimeters in the parallel-to-rise direction on 20 x 20 x 20 cm cube foam, molded to an overall density of about 30 kg/m³. The expansion is observed after a curing time of minutes and then 24 hours, with one face of the mold having initially been opened after 3 or 4 minutes curing. Lower values of expansion indicate improved demold performance.

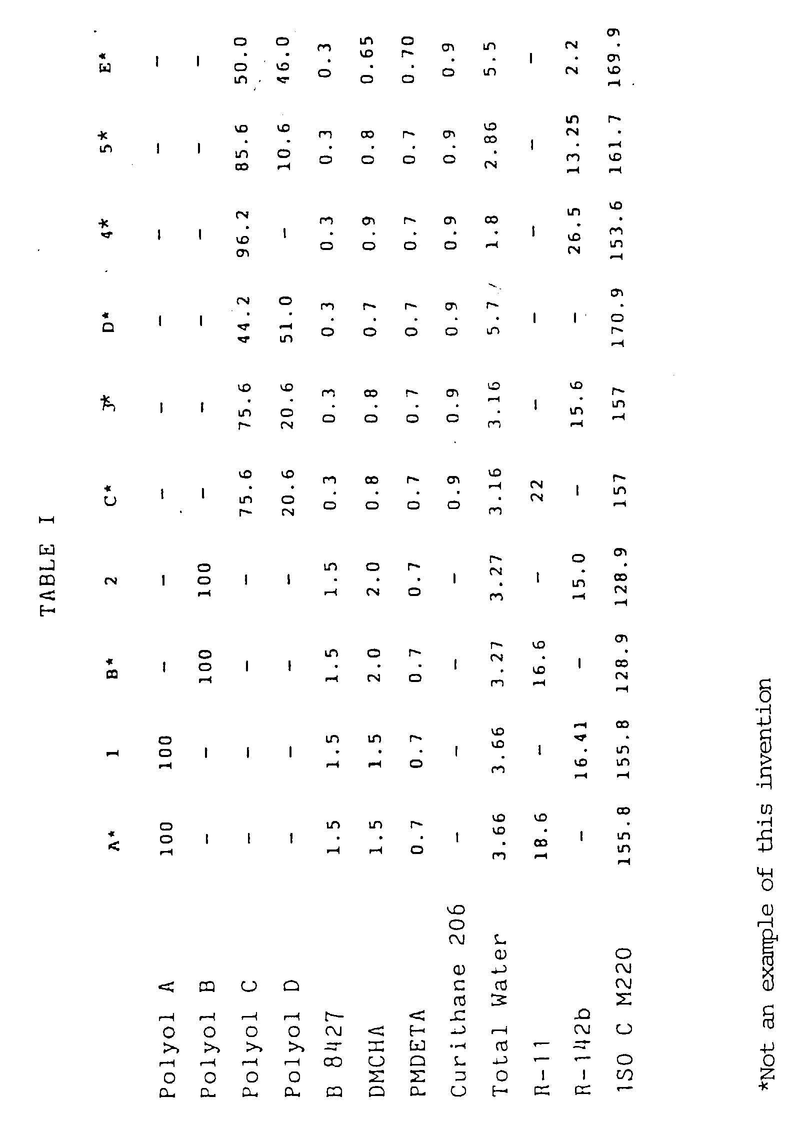

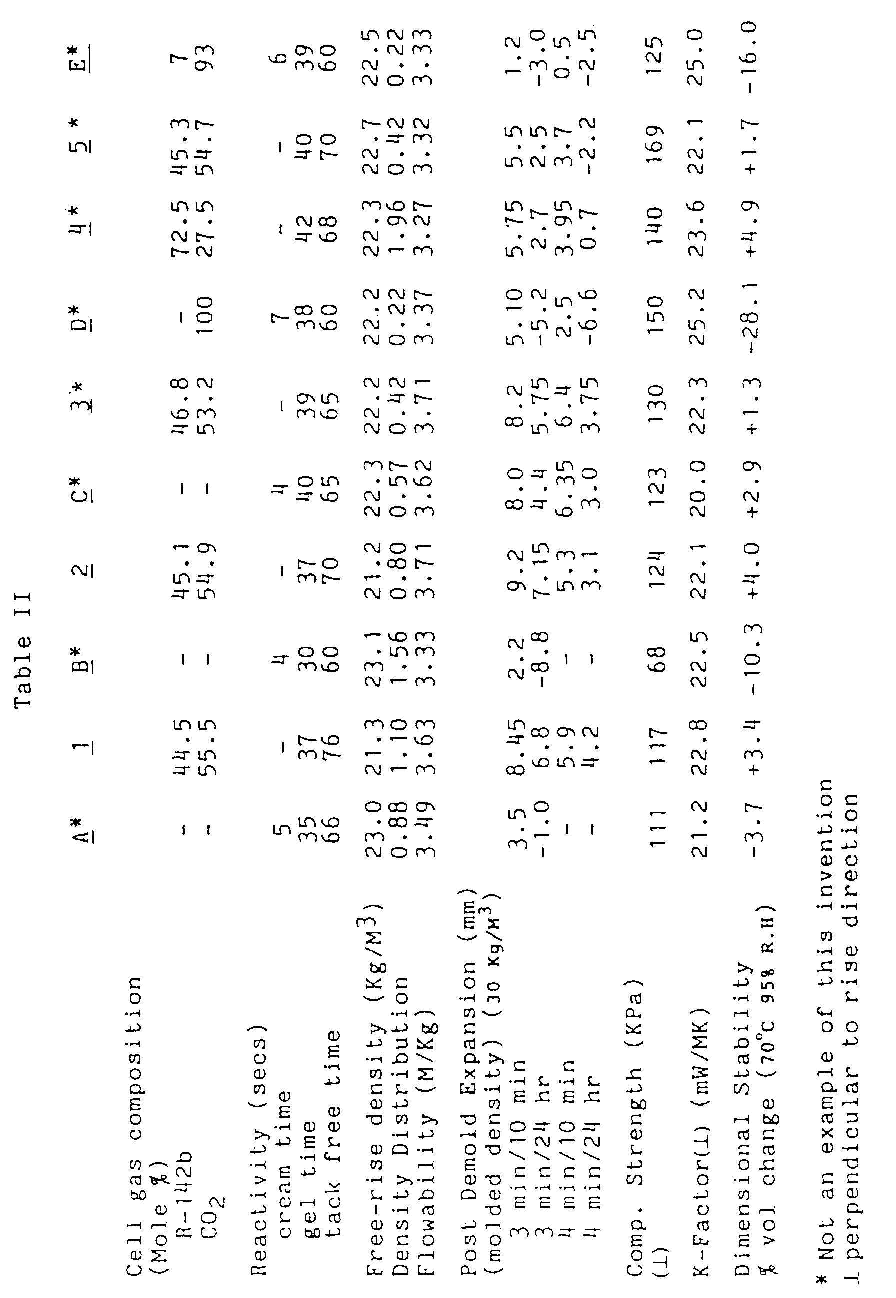

The dimensional stability of Examples 3 to 5 and Comparative Examples C to E has been extensively evaluated.* Dimensional stability of the foams at (A) 20°C, (B) -30°C, (C) 70°C/95% relative humidity and (D) 110°C is reported in Table III. The value noted in Table III are percentage volume change of 5 x 5 x 5 cm. cubes of foam.
*Examples 3 to 5 use a blowing agent composition according to the invention whereas the polyol starting materials do not meet the criteria as specified in claim 1. Thus, Examples 3 to 5, although illustrating one aspect of the invention, do not represent examples of the invention.

The K-factor performance of Examples 3 to 5 and Comparative Examples C to E with respect to time is give in Table IV.

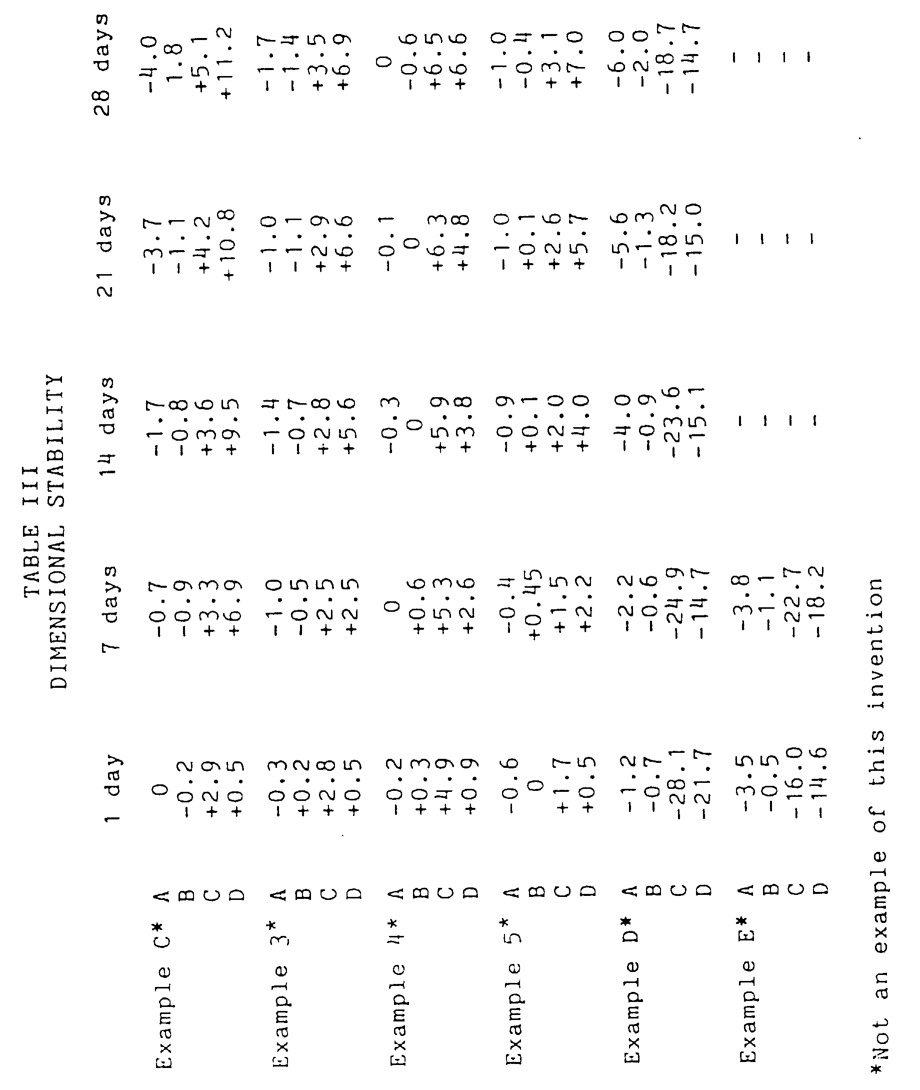

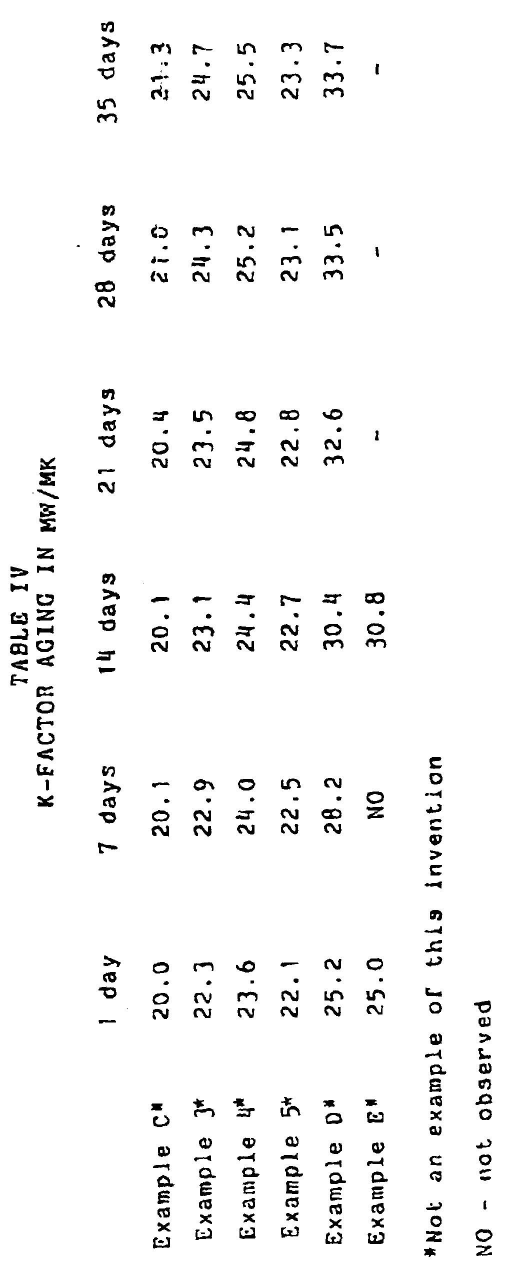

As can be seen from the data in Tables II to IV, foam with acceptable physical properties can be produced according to this invention. The use of blowing agents having an ambient boiling point, greater than 273K, such as the hard CFC trichlorofluoromethane (R-11) can be avoided in the preparation of foam. Improvements in comprehensive strength and demold performance are obtainable. Particularly, significant is the improvement in overall dimensional stability of foams when prepared according to the process of this invention.

### Description for the following Contracting States : DK, GR, LU

This invention relates to rigid, closed-celled polyisocyanate-based foam, particularly polyurethane. polyurethane-isocyanurate and polyurethane-urea foams prepared using blowing agents having boiling points of 266K or less, which are organic compounds, particularly halocarbons.

It is well-known to prepare such polyurethane foams by reacting an organic polyisocyanate with an active hydrogen-containing compound in the presence of a blowing agent or agents. Generally speaking, such blowing agents are inert compounds that do not decompose or react during the polymerization reaction which are liquid at room temperature. The polymerization reaction is exothermic with the reaction exotherm being sufficient to vaporize the blowing agent, which then becomes encapsulated in the liquid phase of the polymerizing reaction mixture resulting in the formation of cells. The formation of cells causes the reaction mixture to expand and form a foam which subsequently cures to become a rigid closed-celled polyurethane foam.

It is also well-known to prepare foams with a combination of such liquid blowing agent(s) and small amounts of a blowing agent precursor. A blowing agent precursor is a substance which reacts chemically with the polymerizing reaction mixture, or decomposes thermally as a result of exposure to, for example the reaction exotherm, generating *"in situ"* a gas. The generated gas functions as additional blowing agent in preparing the foam. A commonly used blowing agent precursor is water, which when reacted with isocyanate provides gaseous carbon dioxide.

Water is frequently used alone in the preparation of open-celled flexible polyurethane foams, but has found little value when used alone or in significant quantities with other blowing agents in the preparation of rigid, closed-celled foams. Frequently, when water is used in significant quantities to prepare rigid foams the resulting products display a high degree of friability, poor compressive strengths, high open-cell content, commercially unattractive thermal insulation properties and poor dimensional stability. The degree of friability and open-cell content of a resulting foam can be reduced by careful selection of reactants used in the preparation of the foam. However, the thermal insulation properties and dimensional stability of the foam are not significantly improved in this manner as they are primarily dependent on the gas content within the closed-cells of the foam.

EP-A 0 351 614 published on January 24, 1990 discloses a process for the preparation of cellular foams according to the polyisocyanate polyaddition method in the presence of a blowing agent having low solubility in the reaction components. As suitable blowing agents, octafluoropropane (b.p. 235K), heptafluoropropane (b.p. 256K) and a plurality of other blowing agents having boiling points of greater than 266K are given.

U.S.-Patent 4,636,529 discloses the preparation of polyurethane foams from an organic isocyanate, an organic polyol containing an aromatic polyester polyol and an inert blowing agent containing CHClF₂ (b.p. 232K). The use of CHClF₂ is essential for increasing the amount of the aromatic polyester polyol in the polyol component.

U.S.-Patent 3,391,093 discloses a process for the preparation of a polyurethane foam by reacting an organic polyisocyanate with a polyester polyol in the presence of 2 to 25 wt.-% of a blowing agent having a boiling point above 222K. The use of CO₂ as a blowing agent originating from the reaction of water and isocyanate is considered as being undesired.

Japanese Patent Application JP-A 57-40533 (CA 97(4):24723s) describes the preparation of a polyurethane foam, using 2-chloro-1,1,1,2-tetrafluorethane and, optionally, further aliphatic and/or halogenated aliphatic hydrocarbons having a boiling point of from 10 to 50°C as a blowing agent. The use of water in the reaction mixture is not disclosed.

It is therefore desirable to provide a process for preparing rigid, closed-celled polyisocyanate-based foams in the presence of water and a blowing agent which is able to minimize or overcome the occurrence of deficiencies in dimensional stability in the resulting foam.

In one aspect, this invention is a process for preparing a rigid closed celled polyisocyanate-based foam having an overall density of from 10 to 500 kg/m³ which comprises contacting and reacting an organic polyisocyanate with an isocyanate reactive composition that contains an active hydrogen-containing compound, water and a physical blowing agent characterized in that isocyanate reactive composition comprises:
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and contains less than 5 percent by weight of an organic compound having a boiling point of 273K or greater; and
(c) water in from 3.27 to 10 weight percent based on total weight of component (a).

In a second aspect, this invention is an isocyanate reactive composition which comprises
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and contains less than 5 percent by weight of an organic compound having a boiling point of 273K or greater; and
(c) water in from 3.27 to 10 weight percent based on total weight of component (a).

Furthermore, this invention concerns a rigid, closed-celled polyisocyanate-based foam obtainable by the process of the invention, wherein the resulting foam contains within its cells a gaseous mixture comprising
(a) from 10 to 75 mole percent based on total moles of (a) and (b) of one or more organic compounds having a boiling point of from 235K to 266K and
(b) from 25 to 90 mole percent based on total moles of (a) and (b) of carbon dioxide,
and which contains less than 5 percent of an organic compound having a boiling point of 273K or greater.

Surprisingly, this invention allows for the preparation of rigid closed-celled polyisocyanate-based foam in the absence of physical blowing agents which are liquid at ambient room temperature. We have discovered that by employing a combination of water and a physical blowing agent having a boiling point of from 235K to 266K closed-celled, rigid polyisocyanate-based foam exhibiting good dimensional stability properties can be prepared. Use of physical blowing agents having higher boiling points in combination with water is not observed to provide the same degree of dimensional stability.

The blowing agent is characterized in that it comprises at least one organic compound having a boiling point at atmospheric pressure of less than or equal to 266K. Advantageously, for the purpose of handling the organic compound has a boiling point at atmospheric pressure of from 235K and preferably from 252K.

The blowing agent is further characterized in that it is substantially free of organic compounds having boiling points of 273K or greater, and preferably 267K or greater. By "substantially free" it is understood that the boiling agent contains less than 5 percent by weight of its total weight, of such high boiling point organic compounds. Preferably, such high boiling point organic compounds are present in less than 3, more preferably less than 1 percent by weight and most preferably are absent from the blowing agent used in this present invention.

Organic compounds which are suitable for use in this invention are those which are essentially inert, do not react or decompose, under the conditions employed when preparing a polyurethane foam, but have boiling points of such that they are readily volatilized by the reaction exotherm. Typically, such organic compounds are hydrocarbons including alkanes, alkenes, cycloalkanes and cycloalkenes; alkyl alkanoates such as methyl formate; and halocarbons. To provide polyurethane foam with commercially interesting insulation properties, the organic compounds when in a gaseous phase advantageously exhibit gas thermal conductivities of less than 20, preferably less than 15, more preferably less than 13 and most preferably less than 12 mW/M.K at 298K.

The preferred organic compounds are halocarbons or mixtures thereof. The halocarbons can be a halogenated hydrocarbon where the hydrocarbon is methane, ethane, propane, ethylene, propylene or cyclic alkane. Such halogenated hydrocarbons can be a chlorocarbon, a bromocarbon, a fluorocarbon, a chlorofluorocarbon or a bromofluorocarbon. In a more preferred embodiment of this invention, the halocarbon compounds contain at least one hydrogen atom on their carbon backbone. The presence of such a hydrogen atom renders the halocarbon more readily degradable in the environment thus preventing the large accumulation of such compounds. When the halocarbon contains no hydrogen on the carbon backbone, it is termed a "hard" halocarbon. When hydrogen is present, the halocarbon is termed a "soft" halocarbon.

Exemplary of methane halocarbons are the chlorofluoromethanes including dichlorodifluoromethane (R-12; b.p. 243K), difluorochloromethane (R-22; b.p. 232K), chlorofluoromethane (R-31; b.p. 264K); the bromofluoromethanes including bromochlorodifluoromethane (R-12B1; b.p. 269K), and bromodifluoromethane (R-22B1; b.p. 258K).

Exemplary of ethane halocarbons are the chlorofluoroethanes including chloropentafluoroethane (R-115; b.p. 234K), chlorotetrafluoroethane (R-124; b.p. 261K or isomer R-124a; b.p. 263K), and chlorodifluoroethane (R-142b; b.p. 264K); the fluoroethanes including tetrafluoroethane (R-134; b.p. 253K or isomer R-134a; b.p. 246K), trifluoroethane (R-143a; b.p. 235K), difluoroethane (R-152a; b.p. 248K) and fluoroethane (R-161; b.p. 236K).

Exemplary of propane halocarbons are chloroheptafluoropropane (R-217; b.p. 271K),and the fluoropropanes including octafluoropropane (R-218; b.p. 235K), heptafluoropropane (R-227a; b.p. 256K), hexafluoropropane (R-236; b.p. 272K), and pentafluoropropane (R-245d; b.p. 253K).

Exemplary of ethylene and propylene halocarbons are chlorotrifluoroethylene (R-1113; b.p. 245K), chlorodifluoroethylene (R-1122; b.p. 255K), trans-chlorofluoroethylene (R-1131; b.p. 269K), gem-chlorofluoroethylene (R-1131a; b.p. 248K), difluoroethylene (R-1132; b.p. 245K) and chloroethylene (R-1140; b.p. 259K), hexafluoropropylene (R-2116a; b.p. 244K), pentafluoro-propylene (R-2125a; b.p. 252K), tetrafluoropropylene (R-2134a; b.p. 245K), and difluoropropylene (R-2152b; b.p. 244K). Exemplary of cyclic halocarbons are hexafluorocyclopropane (C-216; b.p. 244K) and octafluoro-cyclobutane (C-318 b.p. 268K).

The preferred halocarbons for use in this present invention are the chlorofluorocarbons of methane, ethane and propane; the bromofluorocarbons of methane, ethane and propane; and the fluorocarbons of ethane and propane; or mixtures thereof. Especially preferred are the chlorofluoroethane and fluoroethane halocarbons due to their commercial availability and suitability for preparing polyisocyanate-based foam.

The particularly preferred organic compounds for use in this present invention include chlorofluoromethane (R-31), bromodifluoromethane (R-22B1), chlorotetrafluoroethane (R-124 or isomer R-124a), chlorodifluoroethane (R-142b), tetrafluoroethane (R-134 or isomer R-134a), trifluoroethane (R-143), difluoroethane (R-152a) and fluoroethane (R-161), or mixtures thereof.

Especially preferred is chlorodifluoroethane (R-142b) and tetrafluoroethane (R-134 or isomer R-134a).

Polyisocyanate-based foams are prepared by reacting at least one organic polyisocyanate with at least one active hydrogen-containing compound in the presence of water and a blowing agent as described hereinabove.

The quantity of blowing agent employed when preparing a foam is sufficient to give a desired density to the foam and impart the desired dimensional stability. Sufficient blowing agent is employed to provide a polyurethane foam having an overall density of from 10 to 500, preferably from 15 to 200, more preferably from 18 to 100 and most preferably from 18 to 60 kg/m³.

The quantity of water present in the process of this invention is sufficient to provide a noticeable contribution to the blowing and preparation of the foam. Water reacts with isocyanate leading to the generation of gaseous carbon dioxide which can function as a blowing agent. The water is present in from at least 3.27 weight percent based on the total weight of active hydrogen-containing compound present and the quantity of water present does not exceed 10, preferably does not exceed 8, and more preferably does not exceed 7 weight percent.

It is often convenient to preblend the blowing agent with the active hydrogen-containing compound before contacting the resulting blend with the polyisocyanate. It is also possible to simultaneously blend together the polyisocyanate, active hydrogen-containing compound and blowing agent in one operation resulting in the production of polyisocyanate-based foam.

Preferably the blowing agent is blended with the active hydrogen-containing compound before contacting with the polyisocyanate.

An isocyanate reactive composition can be prepared by blending at least one active hydrogen-containing compound with the blowing agent. Advantageously, the blend contains at least one, preferably at least 2 and up to 25, preferably up to 20 and more preferably up to 15 weight percent of the blowing agent by total weight of active hydrogen-containing compound and blowing agent. Isocyanate reactive compositions containing the blowing agent in quantities outside these limits may not provide foam of the desired density. Advantageously, active hydrogen-containing compounds used in preparing the isocyanate reactive composition have an equivalent weight of from 50 to 700, preferably from 70 to 300, more preferably from 90 to 270. For reasons of solubility and retention of blowing agent in the isocyanate-reactive composition, at least one of the active hydrogen-containing compounds has an equivalent weight of at least 140.

Polyisocyanates useful in the process of this invention for making polyisocyanate-based foam include aromatic, aliphatic and cycloaliphatic polyisocyanates and combinations thereof. Representative of these types are diisocyanates such as m- or p-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate (and isomers), naphthylene-1,5-diisocyanate. 1-methylphenyl-2,4-phenyldiisocyanate, diphenylmethane-4,4'-diisocyanate, diphenylmethane-2,4'-diisocyanate, 4,4'-biphenylenediisocyanate, 3,3'-dimethoxy-4,4'-biphenylenediisocyanate and 3,3'-dimethyldiphenylpropane-4,4'-diisocyanate; triisocyanates such as toluene-2,4,6-triisocyanate and polyisocyanates such as 4,4'-dimethyldiphenylmethane-2,2',5',5'-tetraisocyanate and the diverse polymethylenepolyphenylpolyisocyanates.

A crude polyisocyanate may also be used in the practice of this invention, such as the crude toluene diisocyanate obtained by the phosgenation of a mixture of toluene diamines or the crude diphenylmethane diisocyanate obtained by the phosgenation of crude diphenylmethanediamine. The preferred undistilled or crude polyisocyanates are disclosed in U.S. Patent 3,215,652.

Especially preferred are methylene-bridged polyphenylpolyisocyanates, due to their ability to cross-link the polyurethane. The isocyanate index, ratio of equivalents of isocyanates to equivalents of active hydrogen-containing groups, is advantageously from 0.9 to 10, preferably from 1.0 to 4.0, and more preferably from 1.0 to 1.5.

Active hydrogen-containing compounds which are useful in this present invention are polyether polyols, i.e., compounds having at least two hydroxyl groups per molecule, which are especially preferred due to their desirable reactivity with polyisocyanates.

Suitable isocyanate-reactive materials also advantageously have a functionality of at least 2, preferably from 3 and up to 16, and preferably up to 8 active hydrogen atoms per molecule. Isocyanate reactive compounds which have functionalities and equivalent weights outside these limits may also be used, but the resulting foam properties may not be desirable for a rigid application.

Most preferred for preparing rigid foams, on the basis of performance, availability and cost, is a polyol prepared by adding an alkylene oxide to an initiator having, from 3 to 8 active hydrogen atoms per molecule. Exemplary of such polyols include those commercially available under the trademark VORANOL and include Voranol 202, Voranol 360, Voranol 370, Voranol 446, Voranol 490, Voranol 575. Voranol 800, all sold by The Dow Chemical Company, and Pluracol 824, sold by BASF Wyandotte.

Other most preferred polyols include alkylene oxide derivatives of Mannich condensates as taught, for example, in U.S. Patents 3,297,597; 4,137,265 and 4,383,102, and aminoalkylpiperazine-initiated polyethers as described in U.S. Patents 4,704,410 and 4,704,411.

In addition to the foregoing critical components, it is often desirable to employ certain other ingredients in preparing polyisocyanate-based foams. Among these additional ingredients are catalysts, surfactants, flame retardants, preservatives, colorants, antioxidants, reinforcing agents, fillers, and antistatic agents.

When preparing a polyisocyanate-based foam by the process of this invention it is generally highly preferred to employ a minor amount of a surfactant to stabilize the cellular structure of the foaming reaction mixture until it cures. Such surfactants advantageously comprise a liquid or solid organosilicone surfactant. Other, less preferred surfactants include polyethylene glycol ethers of long chain alcohols, tertiary amine or alkanolamine salts of long chain alkyl acid sulfate esters, alkyl sulfonic esters and alkyl arylsulfonic acids. Such surfactants are employed in amounts sufficient to stabilize the foaming reaction mixture against cell collapse and the formation of large, uneven cells. Typically, from 0.2 to 5 parts of the surfactant per 100 parts by weight polyol are sufficient for this purpose.

One or more catalysts for the reaction of the polyol and water with the polyisocyanate are advantageously used. Any suitable urethane catalyst may be used, including tertiary amine compounds and organometallic compounds. Exemplary tertiary amine compounds include triethylenediamine, n-methyl morpholine, pentamethyldiethylenetriamine, tetramethylethylenediamine, 1-methyl-4-dimethylaminoethylpiperazine, 3-methoxy-N-dimethylpropylamine, N-ethyl morpholine, diethylethanolamine, N-coco morpholine, N,N-dimethyl-N',N'-dimethyl isopropylpropylenediamine, N,N-diethyl-3-diethylaminopropylamine, dimethylbenzylamine and the like. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-2-ethyl hexanoate, as well as other organometallic compounds such as are disclosed in U.S. Patent 2,846,408. A catalyst for the trimerization of polyisocyanates, such as an alkali metal alkoxide, alkali metal carboxylate, or quaternary amine compound, may also optionally be employed herein. Such catalysts are used in an amount which measurably increases the rate of reaction. Typical amounts are from 0.001 to 1 part of catalyst per 100 parts by weight of polyol.

In the process of making a polyisocyanate-based foam, the polyol(s), polyisocyanate and other components are contacted, thoroughly mixed and permitted to expand and cure into a cellular polymer. The particulate mixing apparatus is not critical, and various types of mixing head and spray apparatus are conveniently used. It is often convenient, but not necessary, to preblend certain of the raw materials prior to reacting the polyisocyanate and active hydrogen-containing components. For example, it is often useful to blend the polyol(s), blowing agent, water, surfactants, catalysts and other components except for polyisocyanates, and then contact this mixture with the polyisocyanate. Alternatively, all components can be introduced individually to the mixing zone where the polyisocyanate and polyol(s) are contacted. It is also possible to pre-react all or a portion of the polyol(s) with the polyisocyanate to form a prepolymer, although such is not preferred.

As already mentioned, in one aspect this invention refers to a polyisocyanate-based foam. The rigid, closed-celled polyisocyanate-based foam is obtainable by the inventive process and the resulting foam contains within its cells a gaseous mixture comprising
(a) from 10 to 75 mole percent based on total moles of (a) and (b) of one or more organic compounds having a boiling point of from 235K to 266K and
(b) from 25 to 90 mole percent based on total moles of (a) and (b) of carbon dioxide,
and which contains less than 5 percent by weight of an organic compound having a boiling point of 273K or greater.

Component (a) of the gaseous mixture within the cells is present in from at least 10, preferably from at least 20, and more preferably from at least 25, and up to 75, preferably up to 65, and more preferably up to 55 mole percent based on total moles of (a) and (b) present.

Component (b), carbon dioxide generated by the reaction of water with organic polyisocyanate is present in from at least 25, preferably from at least 35, and more preferably from at least 45, and up to 90, preferably up to 80, and more preferably up to 75 mole percent based on total moles of (a) and (b) present.

The cell gas mixture is further characterized in that it is substantially free of organic compounds having boiling points of 273K or greater, and preferably 267K or greater. By "substantially free" it is understood that the gas mixture within the cell contains less than 5 mole percent by total moles of (a) and (b) present of such high boiling point organic compounds. Preferably, such high boiling point organic compounds are present in less than 3, more preferably less than 1 mole percent and most preferably are absent from the blowing agent composition.

Cell gas composition is calculated based on quantities of water and blowing agent present in the foam-forming reaction.

The polyisocyanate-based foam obtainable by the process of this invention is useful in a wide range of applications, such as in spray insulation, appliance foam, rigid insulating boardstock, laminates, and many other types of rigid foam.

The following examples are given to illustrate the invention and should not be interpreted as limiting it in any way. Unless stated otherwise, all parts and percentages are given by weight.

### Example 1

Rigid, closed-celled, polyisocyanate-based foams are prepared from the formulation described in Table I. The following abbreviations are used in the table.
- Polyol A-a: propoxylated sorbitol-initiated polyol having an equivalent weight of 146
- Polyol B-a: propoxylated sorbitol-initiated polyol having an equivalent weight of 187
- Polyol C-a: blend of propoxylated sucrose- and glycerine-initiated polyols, an ethylenediamine-initiated polyol and a 500 equivalent weight diol. Total blend has an equivalent weight of 122, average functionality 4.0
- Polyol D-a: 500 equivalent weight propoxylateddiol
- B8427 -: Tegostab® B8427, a silicone surfactant sold by Th. Goldschmidt
- DMCHA -: catalyst, dimethylcyclohexylamine
- PMDETA -: catalyst, pentamethyldiethylenetriamine
- Curithane 206 -: catalyst, sold by The Dow Chemical Company
- R-11;: Refrigerant-11, trichlorofluoromethane
- R-142b;: Refrigerant-142b, chlorodifluoroethane
- 1SO C M220: a crude polymeric methanediphenylisocyanate NCO equivalent weight 137, average functionality sold by The Dow Chemical

Foams are prepared using a high pressure foaming machine. The physical properties of these foams are shown in Table II.

The flowability, density distribution, compressive strength, thermal conductivity (K-factor) and dimensional stability is observed using molded foam prepared in a Brett mold operated at about 45°C. Molded foam dimensions are 200 x 20 x 5 cm. Molded foam having an overall density of about 32 kg/m³ is prepared.

Larger flowability values indicates better flowability of the foaming system. Lower values of density distribution indicate a more uniform density across the foam. K-factor is measured with an Anacon Model 88 Thermal Conductivity Analyzer with cold and hot plate temperatures of 10.2°C and 37.8°C, respectively. Lower values of K-factor indicate better insulative properties.

Post demold expansion is measured in millimeters in the parallel-to-rise direction on 20 x 20 x 20 cm cube foam, molded to an overall density of about 30 kg/m³. The expansion is observed after a curing time of 10 minutes and then 24 hours, with one face of the mold having initially been opened after 3 or 4 minutes curing. Lower values of expansion indicate improved demold performance.

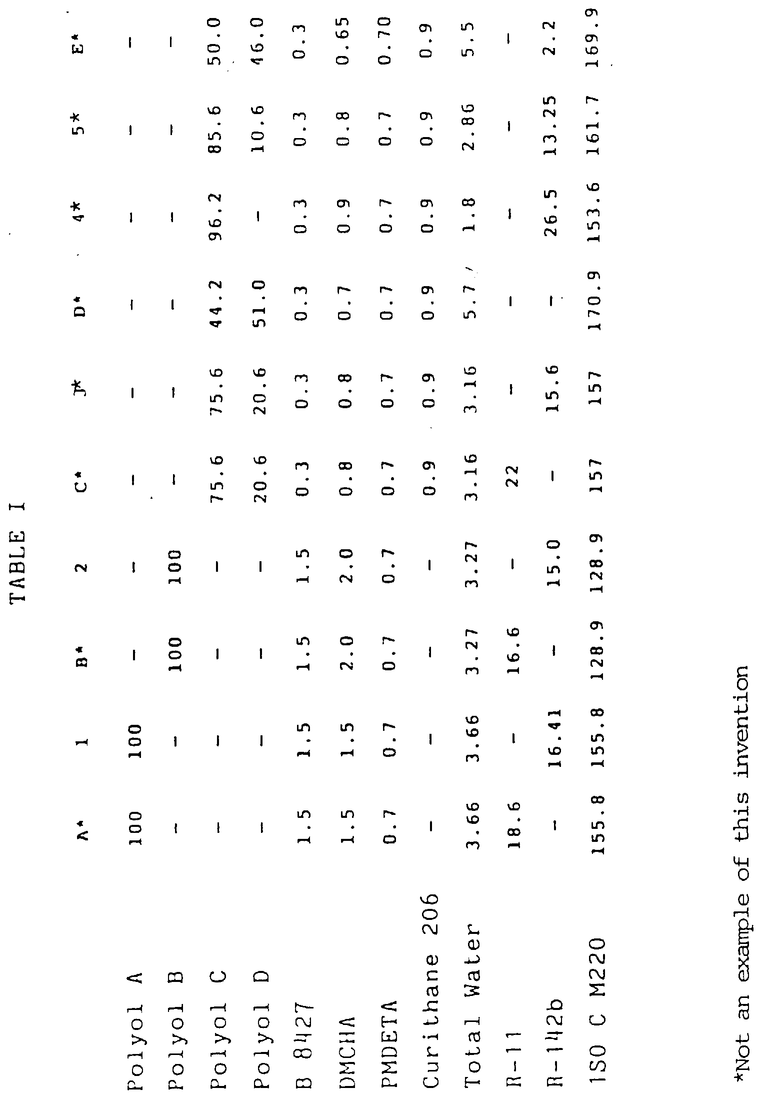

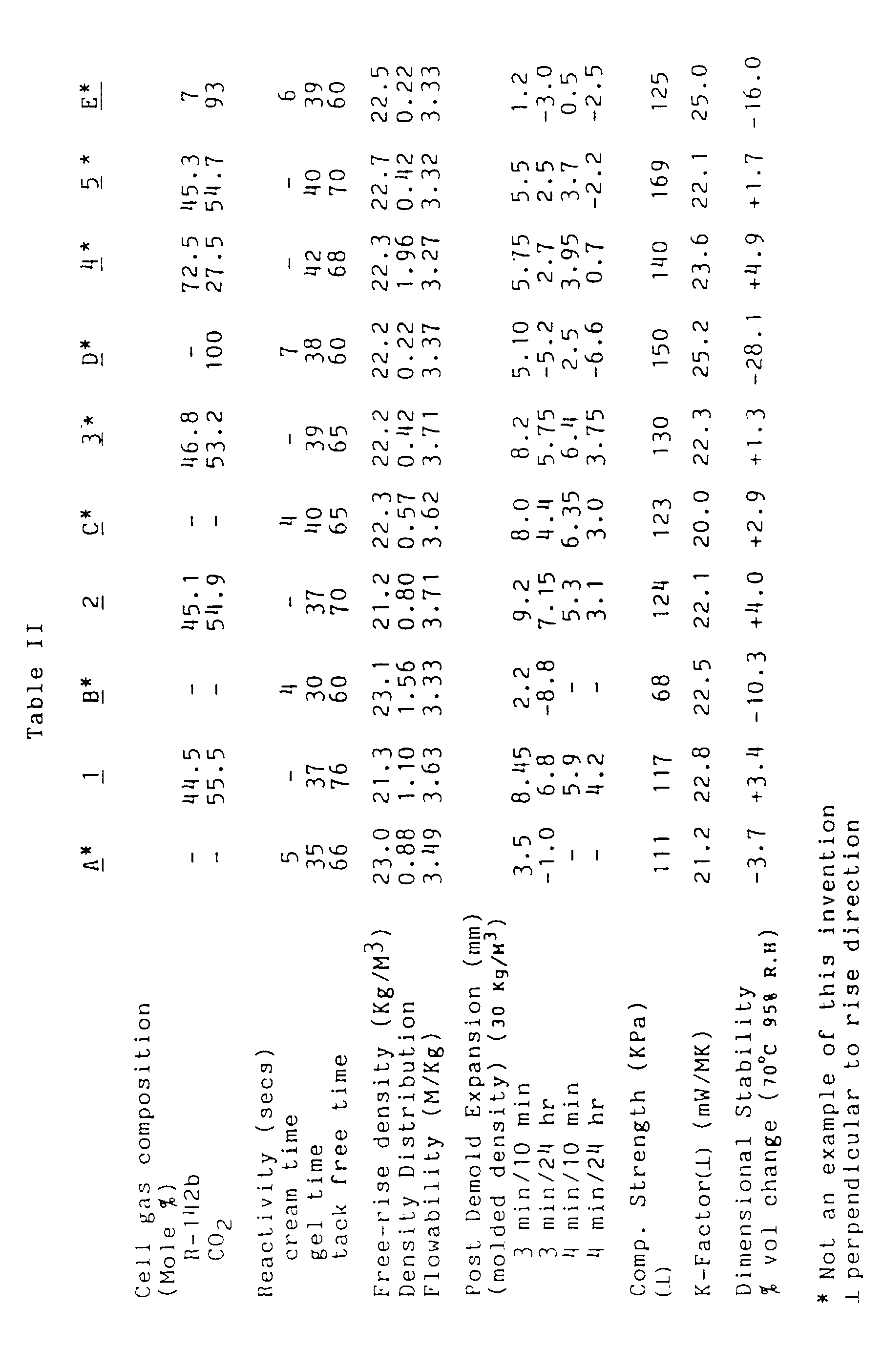

The dimensional stability of Examples 3 to 5 and Comparative Examples C to E has been extensively evaluated.*Dimensional stability of the foams at (A) 20°C, (B) -30°C, (C) 70°C/95% relative humidity and (D) 110°C is reported in Table III. The value noted in Table III are percentage volume change of 5 x 5 x 5 cm. cubes of foam.
*Examples 3 to 5 use a blowing agent composition according to the invention whereas the polyol starting materials do not meet the criteria as specified in claim 1. Thus, Examples 3 to 5, although illustrating one aspect of the invention, do not represent examples of the invention.

The K-factor performance of Examples 3 to 5 and Comparative Examples C to E with respect to time is give in Table IV.

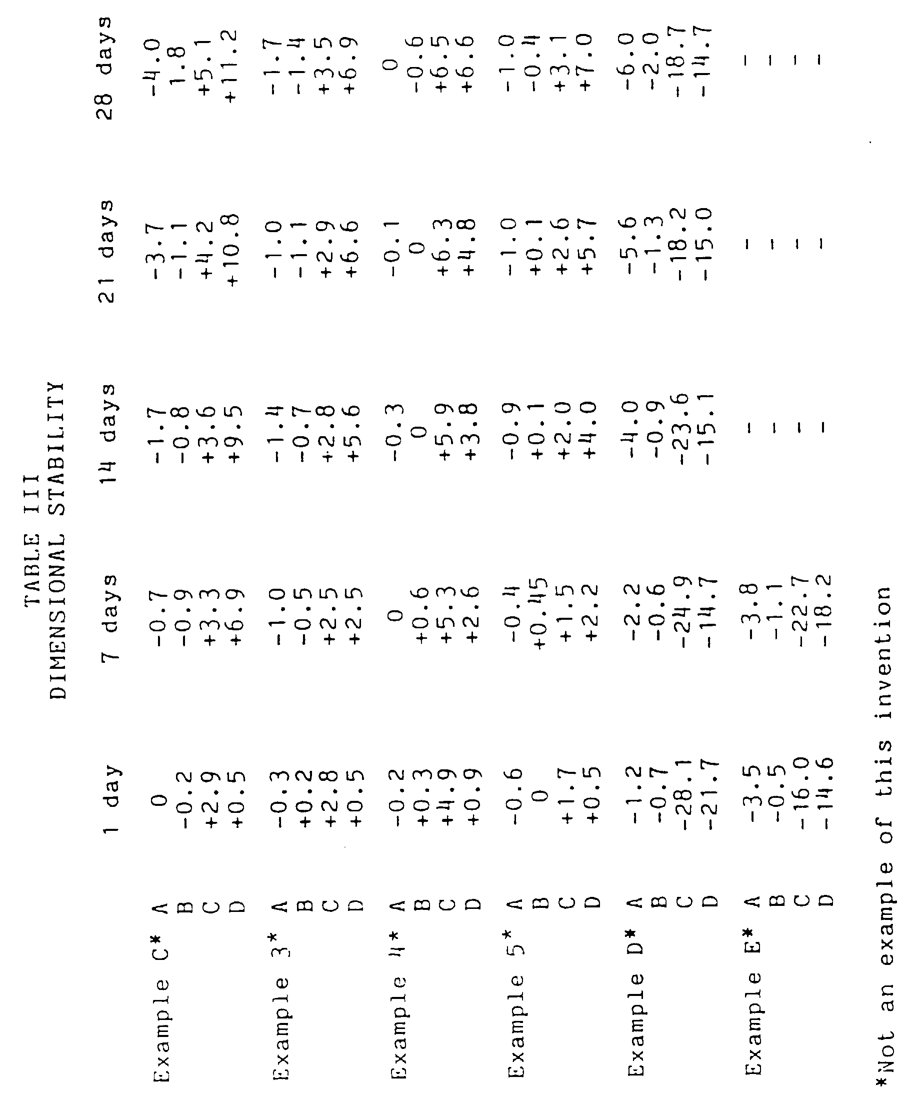

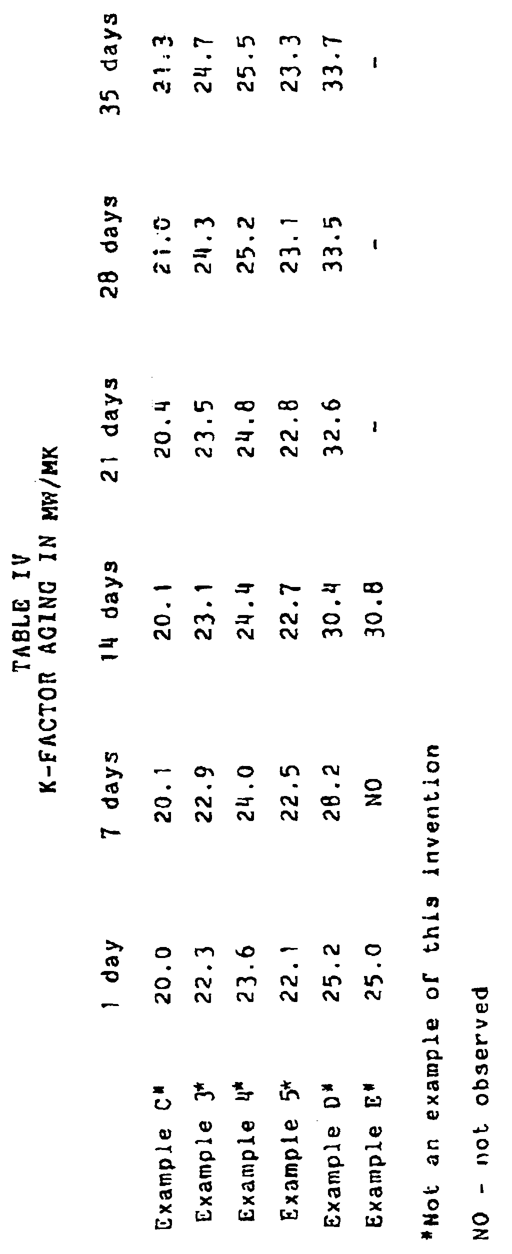

As can be seen from the data in Tables II to IV, foam with acceptable physical properties can be produced according to this invention. The use of blowing agents having an ambient boiling point, greater than 273K, such as the hard CFC trichlorofluoromethane (R-11) can be avoided in the preparation of foam. Improvements in comprehensive strength and demold performance are obtainable. Particularly, significant is the improvement in overall dimensional stability of foams when prepared according to the process of this invention.

## Claims (Claims for the following Contracting State(s): AT, BE, CH, DE, ES, FR, GB, IT, LI, NL, SE)

1. A process for preparing a rigid closed celled polyisocyanate-based foam having an overall density of from 10 to 500 kg/m³ which comprises contacting and reacting an organic polyisocyanate with an isocyanate reactive composition that contains an active hydrogen-containing compound, water and a physical blowing agent characterized in that isocyanate reactive composition comprises:
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and excluding octafluoropropane and heptafluoropropane and contains less than 5 percent by weight of an organic compound having a boiling point of 273K or greater; and
(c) water in from 3.27 to 10 weight percent based on total weight of component (a).

2. A process as claimed in Claim 1 wherein the halocarbon is a chlorocarbon, a bromocarbon, a fluoro-carbon, a chlorofluorocarbon or a bromofluorocarbon and is an adduct of methane, ethane, propane, ethylene, propylene, a cylcloalkane or mixtures thereof.

3. A process as claimed in any one of the proceeding claims wherein the halocarbon compound is a chlorofluoroethane, a fluoroethane or mixtures thereof.

4. A process as claimed in Claim 3 wherein the chlorofluoroethane is chloropentafluoroethane (R-115), chlorotetrafluoroethane (R-124 or isomer R-124a) or chlorodifluoroethane (R-142b).

5. A process as claimed in Claim 4 wherein the fluoroethane is tetrafluoroethane (R-134 or isomer R-134a), trifluoroethane (R-143), difluoroethane (R-152a) or fluoroethane (R-161).

6. A process as claimed in Claim 4 wherein the halocarbon compound is chlorodifluoroethane (R-142b) or tetrafluoroethane (R-134 or isomer R-134a).

7. A process as claimed in any one of the preceding claims wherein water is present in from 3.27 to 8.0 weight percent based on total weight of active hydrogen-containing compound present.

8. An isocyanate reactive composition that comprises:
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and excluding octafluoropropane and heptafluoropropane and contains less than 5 percent by weight of an organic compound having a boiling point of 273K or greater; and
(c) water in from 3.27 to 10 weight percent based on total weight of component (a).

## Claims (Claims for the following Contracting State(s): DK, GR, LU)

1. A process for preparing a rigid closed celled polyisocyanate-based foam having an overall density of from 10 to 500 kg/m³ which comprises contacting and reacting an organic polyisocyanate with an isocyanate reactive composition that contains an active hydrogen-containing compound, water and a physical blowing agent characterized in that isocyanate reactive composition comprises:
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and contains less than 5 percent by weight of an organic compound having a boiling point of 273K or greater; and
(c) water in from 3.27 to 10 weight percent based on total weight of component (a).

2. A process as claimed in Claim 1 wherein the halocarbon is a chlorocarbon, a bromocarbon, a fluoro-carbon, a chlorofluorocarbon or a bromofluorocarbon and is an adduct of methane, ethane, propane, ethylene, propylene, a cylcloalkane or mixtures thereof.

3. A process as claimed in any one of the proceeding claims wherein the halocarbon compound is a chlorofluoroethane, a fluoroethane or mixtures thereof.

4. A process as claimed in Claim 3 wherein the chlorofluoroethane is chloropentafluoroethane (R-115), chlorotetrafluoroethane (R-124 or isomer R-124a) or chlorodifluoroethane (R-142b).

5. A process as claimed in Claim 4 wherein the fluoroethane is tetrafluoroethane (R-134 or isomer R-134a), trifluoroethane (R-143), difluoroethane (R-152a) or fluoroethane (R-161).

6. A process as claimed in Claim 4 wherein the halocarbon compound is chlorodifluoroethane (R-142b) or tetrafluoroethane (R-134 or isomer R-134a).

7. A process as claimed in any one of the preceding claims wherein water is present in from 3.27 to 8.0 weight percent based on total weight of active hydrogen-containing compound present.

8. An isocyanate reactive composition that comprises:
(a) an active hydrogen-containing compound consisting of one or more polyether polyols and containing at least one polyether polyol having an equivalent weight of at least 140 and from 3 to 8 active hydrogen atoms per molecule;
(b) from 1 to 25 percent by weight based of total weight of components (a) and (b) present of a physical blowing agent, characterized in that the blowing agent comprises one or more halocarbon compounds having a boiling point of from 235K to 266K and contains less than 5 percent by weight of an organic compound having a boiling point of 273K or greater; and
(c) water in from 3.27 to 10 weight percent based on total weight of component (a).

## Patentansprüche (Patentansprüche für folgende(n) Vertragsstaat(en): AT, BE, CH, DE, ES, FR, GB, IT, LI, NL, SE)

1. Verfahren zur Herstellung eines steifen, geschlossenzelligen Schaumes auf Polyisocyanatbasis mit einer Gesamtdichte von 10 bis 500 kg/m³, umfassend das in Kontakt bringen und Umsetzen eines organischen Polyisocyanats mit einer isocyanatreaktiven Zusammensetzung, die eine aktiven Wasserstoff enthaltende Verbindung, Wasser und ein physikalisches Treibmittel enthält, dadurch gekennzeichnet, daß die isocyanatreaktive Zusammensetzung enthält:
(a) eine aktiven Wasserstoff enthaltende Verbindung, die aus einem oder mehreren Polyetherpolyolen besteht, und mindestens ein Polyetherpolyol enthält, das ein Äquivalentgewicht von mindestens 140 und von 3 bis 8 aktive Wasserstoffatome pro Molekül aufweist;
(b) von 1 bis 25 Gewichtsprozent basierend auf dem Gesamtgewicht der Komponenten (a) und (b) eines physikalischen Treibmittels, dadurch gekennzeichnet, daß das Treibmittel eine oder mehrere Halogenkohlenstoffverbindungen mit einem Siedepunkt von 235 K bis 266 K umfaßt und Oktafluorpropan und Heptafluorpropan ausgeschlossen sind und, daß es weniger als 5 Gewichtsprozent einer organischen Verbindung mit einem Siedepunkt von 273 K oder höher enthält; und
(c) Wasser in von 3,27 bis 10 Gewichtsprozent basierend auf dem Gesamtgewicht von Komponente (a).

2. Verfahren nach Anspruch 1, worin der Halogenkohlenstoff ein Chlorkohlenstoff, ein Bromkohlenstoff, ein Fluorkohlenstoff, ein Chlorfluorkohlenstoff oder ein Bromfluorkohlenstoff ist und ein Addukt von Methan, Ethan, Propan, Ethylen, Propylen, einem Cycloalkan oder Gemischen davon ist.

3. Verfahren nach einem der vorhergehenden Ansprüche, worin die Halogenkohlenstoffverbindung ein Chlorfluorethan, ein Fluorethan oder Gemische davon ist.

4. Verfahren nach Anspruch 3, worin das Chlorfluorethan Chlorpentafluorethan (R-115), Chlortetrafluorethan (R-124 oder Isomer R-124a) oder Chlordifluorethan (R-142b) ist.

5. Verfahren nach Anspruch 4, worin das Fluorethan Tetrafluorethan (R-134 oder Isomer R-134a), Trifluorethan (R-143), Difluorethan (R-152a) oder Fluorethan (R-161) ist.

6. Verfahren nach Anspruch 4, worin die Halogenkohlenstoffverbindung Chlordifluorethan (R-142b) oder Tetrafluorethan (R-134 oder Isomer R-134a) ist.

7. Verfahren nach einem der vorhergehenden Ansprüche, worin Wasser in von 3,27 bis 8,0 Gewichtsprozent basierend auf dem Gesamtgewicht aktiven Wasserstoff enthaltender Verbindung vorliegt.

8. Isocyanatreaktive Zusammensetzung, umfassend:
(a) eine aktiven Wasserstoff enthaltende Verbindung, die aus einem oder mehreren Polyetherpolyolen besteht, und mindestens ein Polyetherpolyol enthält, das ein Äquivalentgewicht von mindestens 140 und von 3 bis 8 aktive Wasserstoffatome pro Molekül aufweist;
(b) von 1 bis 25 Gewichtsprozent basierend auf dem Gesamtgewicht der Komponenten (a) und (b) eines physikalischen Treibmittels, dadurch gekennzeichnet, daß das Treibmittel eine oder mehrere Halogenkohlenstoffverbindungen mit einem Siedepunkt von 235 K bis 266 K umfaßt und Oktafluorpropan und Heptafluorpropan ausgeschlossen sind und, daß es weniger als 5 Gewichtsprozent einer organischen Verbindung mit einem Siedepunkt von 273 K oder höher enthält; und
(c) Wasser in von 3,27 bis 10 Gewichtsprozent basierend auf dem Gesamtgewicht von Komponente (a).

## Patentansprüche (Patentansprüche für folgende(n) Vertragsstaat(en): DK, GR, LU)

1. Verfahren zur Herstellung eines steifen, geschlossenzelligen Schaumes auf Polyisocyanatbasis mit einer Gesamtdichte von 10 bis 500 kg/m³, umfassend das in Kontakt bringen und Umsetzen eines organischen Polyisocyanats mit einer isocyanatreaktiven Zusammensetzung, die eine aktiven Wasserstoff enthaltende Verbindung, Wasser und ein physikalisches Treibmittel enthält, dadurch gekennzeichnet, daß die isocyanatreaktive Zusammensetzung enthält:
(a) eine aktiven Wasserstoff enthaltende Verbindung, die aus einem oder mehreren Polyetherpolyolen besteht, und mindestens ein Polyetherpolyol enthält, das ein Äquivalentgewicht von mindestens 140 und von 3 bis 8 aktive Wasserstoffatome pro Molekül aufweist;
(b) von 1 bis 25 Gewichtsprozent basierend auf dem Gesamtgewicht der Komponenten (a) und (b) eines physikalischen Treibmittels, dadurch gekennzeichnet, daß das Treibmittel eine oder mehrere Halogenkohlenstoffverbindungen mit einem Siedepunkt von 235 K bis 266 K umfaßt und weniger als 5 Gewichtsprozent einer organischen Verbindung mit einem Siedepunkt von 273 K oder höher enthält; und
(c) Wasser in von 3,27 bis 10 Gewichtsprozent basierend auf dem Gesamtgewicht von Komponente (a).

2. Verfahren nach Anspruch 1, worin der Halogenkohlenstoff ein Chlorkohlenstoff, ein Bromkohlenstoff, ein Fluorkohlenstoff, ein Chlorfluorkohlenstoff oder ein Bromfluorkohlenstoff ist und ein Addukt von Methan, Ethan, Propan, Ethylen, Propylen, einem Cycloalkan oder Gemischen davon ist.

3. Verfahren nach einem der vorhergehenden Ansprüche, worin die Halogenkohlenstoffverbindung ein Chlorfluorethan, ein Fluorethan oder Gemische davon ist.

4. Verfahren nach Anspruch 3, worin das Chlorfluorethan Chlorpentafluorethan (R-115), Chlortetrafluorethan (R-124 oder Isomer R-124a) oder Chlordifluorethan (R-142b) ist.

5. Verfahren nach Anspruch 4, worin das Fluorethan Tetrafluorethan (R-134 oder Isomer R-134a), Trifluorethan (R-143), Difluorethan (R-152a) oder Fluorethan (R-161) ist.

6. Verfahren nach Anspruch 4, worin die Halogenkohlenstoffverbindung Chlordifluorethan (R-142b) oder Tetrafluorethan (R-134 oder Isomer R-134a) ist.

7. Verfahren nach einem der vorhergehenden Ansprüche, worin Wasser in von 3,27 bis 8,0 Gewichtsprozent basierend auf dem Gesamtgewicht aktiven Wasserstoff enthaltender Verbindung vorliegt.

8. Isocyanatreaktive Zusammensetzung, umfassend:
(a) eine aktiven Wasserstoff enthaltende Verbindung, die aus einem oder mehreren Polyetherpolyolen besteht, und mindestens ein Polyetherpolyol enthält, das ein Äquivalentgewicht von mindestens 140 und von 3 bis 8 aktive Wasserstoffatome pro Molekül aufweist;
(b) von 1 bis 25 Gewichtsprozent basierend auf dem Gesamtgewicht der Komponenten (a) und (b) eines physikalischen Treibmittels, dadurch gekennzeichnet, daß das Treibmittel eine oder mehrere Halogenkohlenstoffverbindungen mit einem Siedepunkt von 235 K bis 266 K umfaßt und weniger als 5 Gewichtsprozent einer organischen Verbindung mit einem Siedepunkt von 273 K oder höher enthält; und
(c) Wasser in von 3,27 bis 10 Gewichtsprozent basierend auf dem Gesamtgewicht von Komponente (a).

## Revendications (Revendications pour l'(les) Etat(s) contractant(s) suivant(s): AT, BE, CH,DE, ES, FR, GB, IT, LI, NL, SE)

1. Procédé de préparation d'une mousse à base de polyisocyanate, à cellules fermées, rigide, ayant une densité globale de 10 à 500 kg/m³, qui comprend la mise en contact et la réaction d'un polyisocyanate organique avec une composition apte à réagir avec un isocyanate, contenant un composé à hydrogène actif, de l'eau et un agent d'expansion physique, procédé caractérisé en ce que la composition apte à réagir avec un isocyanate renferme :
(a) un composé à hydrogène actif, constitué d'un ou plusieurs polyéther-polyols et contenant au moins un polyéther-polyol ayant une masse molaire par équivalent d'au moins 140 et de 3 à 8 atomes d'hydrogène actif par molécule,
(b) de 1 à 25 pour cent en poids, par rapport au poids total des constituants (a) et (b) présents, d'un agent d'expansion physique qui est caractérisé en ce qu'il comprend un ou plusieurs composés du type halogénocarbone, ayant un point d'ébullition de 235K à 266K, à l'exclusion de l'octafluoropropane et de l'heptafluoropropane, et en ce qu'il contient moins de 5 pour cent en poids de composé organique ayant un point d'ébullition supérieur ou égal à 273K, et
(c) de l'eau en une proportion de 3,27 à 10 pour cent en poids, par rapport au poids total de constituant (a).

2. Procédé selon la revendication 1, dans lequel le composé du type halogénocarbone est un chlorocarbone, un bromocarbone, un fluorocarbone, un chlorofluorocarbone ou un bromofluorocarbone, et est un produit d'addition du méthane, de l'éthane, du propane, de l'éthylène, du propylène ou d'un cycloalcane, ou bien est un mélange de tels composés.

3. Procédé selon la revendication 1 ou 2, dans lequel le composé du type halogénocarbone est un chlorofluoroéthane, un fluoroéthane ou un mélange des deux.

4. Procédé selon la revendication 3, dans lequel le chlorofluoroéthane est le chloropentafluoroéthane (R-115), le chlorotétrafluoroéthane (R-124 ou isomère R-124a) ou le chlorodifluoroéthane (R-142b).

5. Procédé selon la revendication 4, dans lequel le fluoroéthane est le tétrafluoroéthane (R-134 ou isomère R-134a), le trifluoroéthane (R-143), le difluoroéthane (R-152a) ou le fluoroéthane (R-161).

6. Procédé selon la revendication 4, dans lequel le composé du type halogénocarbone est le chlorodifluoroéthane (R-142b) ou le tétrafluoroéthane (R-134 ou isomère R-134a).

7. Procédé selon l'une quelconque des revendications précédentes, dans lequel de l'eau est présente en une proportion de 3,27 à 8,0 pour cent en poids par rapport au poids total de composé à hydrogène actif présent.

8. Composition apte à réagir avec un isocyanate, qui renferme:
(a) un composé à hydrogène actif, constitué d'un ou plusieurs polyéther-polyols et contenant au moins un polyéther-polyol ayant une masse molaire par équivalent d'au moins 140 et de 3 à 8 atomes d'hydrogène actif par molécule,
(b) de 1 à 25 pour cent en poids, par rapport au poids total des constituants (a) et (b) présents, d'un agent d'expansion physique qui est caractérisé en ce qu'il comprend un ou plusieurs composés du type halogénocarbone, ayant un point d'ébullition de 235K à 266K, à l'exclusion de l'octafluoropropane et de l'heptafluoropropane, et en ce qu'il contient moins de 5 pour cent en poids de composé organique ayant un point d'ébullition supérieur ou égal à 273K, et
(c) de l'eau en une proportion de 3,27 à 10 pour cent en poids, par rapport au poids total de constituant (a).

## Revendications (Revendications pour l'(les) Etat(s) contractant(s) suivant(s): DK, GR, LU)

1. Procédé de préparation d'une mousse à base de polyisocyanate, à cellules fermées, rigide, ayant une densité globale de 10 à 500 kg/m³, qui comprend la mise en contact et la réaction d'un polyisocyanate organique avec une composition apte à réagir avec un isocyanate, contenant un composé à hydrogène actif, de l'eau et un agent d'expansion physique, procédé caractérisé en ce que la composition apte à réagir avec un isocyanate renferme :
(a) un composé à hydrogène actif, constitué d'un ou plusieurs polyéther-polyols et contenant au moins un polyéther-polyol ayant une masse molaire par équivalent d'au moins 140 et de 3 à 8 atomes d'hydrogène actif par molécule,
(b) de 1 à 25 pour cent en poids, par rapport au poids total des constituants (a) et (b) présents, d'un agent d'expansion physique qui est caractérisé en ce qu'il comprend un ou plusieurs composés du type halogénocarbone, ayant un point d'ébullition de 235K à 266K, et en ce qu'il contient moins de 5 pour cent en poids de composé organique ayant un point d'ébullition supérieur ou égal à 273K, et
(c) de l'eau en une proportion de 3,27 à 10 pour cent en poids, par rapport au poids total de constituant (a).

2. Procédé selon la revendication 1, dans lequel le composé du type halogénocarbone est un chlorocarbone, un bromocarbone, un fluorocarbone, un chlorofluorocarbone ou un bromofluorocarbone, et est un produit d'addition du méthane, de l'éthane, du propane, de l'éthylène, du propylène ou d'un cycloalcane, ou bien est un mélange de tels composés.

3. Procédé selon la revendication 1 ou 2, dans lequel le composé du type halogénocarbone est un chlorofluoroéthane, un fluoroéthane ou un mélange des deux.

4. Procédé selon la revendication 3, dans lequel le chlorofluoroéthane est le chloropentafluoroéthane (R-115), le chlorotétrafluoroéthane (R-124 ou isomère R-124a) ou le chlorodifluoroéthane (R-142b).

5. Procédé selon la revendication 4, dans lequel le fluoroéthane est le tétrafluoroéthane (R-134 ou isomère R-134a), le trifluoroéthane (R-143), le difluoroéthane (R-152a) ou le fluoroéthane (R-161).

6. Procédé selon la revendication 4, dans lequel le composé du type halogénocarbone est le chlorodifluoroéthane (R-142b) ou le tétrafluoroéthane (R-134 ou isomère R-134a).

7. Procédé selon l'une quelconque des revendications précédentes, dans lequel de l'eau est présente en une proportion de 3,27 à 8,0 pour cent en poids par rapport au poids total de composé à hydrogène actif présent.

8. Composition apte à réagir avec un isocyanate, qui renferme:
(a) un composé à hydrogène actif, constitué d'un ou plusieurs polyéther-polyols et contenant au moins un polyéther-polyol ayant une masse molaire par équivalent d'au moins 140 et de 3 à 8 atomes d'hydrogène actif par molécule,
(b) de 1 à 25 pour cent en poids, par rapport au poids total des constituants (a) et (b) présents, d'un agent d'expansion physique qui est caractérisé en ce qu'il comprend un ou plusieurs composés du type halogénocarbone, ayant un point d'ébullition de 235K à 266K, et en ce qu'il contient moins de 5 pour cent en poids de composé organique ayant un point d'ébullition supérieur ou égal à 273K, et
(c) de l'eau en une proportion de 3,27 à 10 pour cent en poids, par rapport au poids total de constituant (a).
